# EUROPÄISCHE PATENTSCHRIFT

(11) **EP 3 821 513 B1**
(45) Veröffentlichungstag und Bekanntmachung des Hinweises auf die Patenterteilung: **07.06.2023**
(21) Anmeldenummer: 19749205.1
(22) Anmeldetag: 10.07.2019
(51) Int. Cl.: B60L 53/62, H02J 3/14, B60L 53/63, H02J 7/00

(54) **VERFAHREN UND VORRICHTUNG ZUM AUFLADEN ELEKTRISCHER ENERGIESPEICHER**
METHOD AND DEVICE FOR CHARGING ELECTRIC ENERGY STORES
PROCÉDÉ ET DISPOSITIF POUR LE RECHARGEMENT D'ACCUMULATEURS D'ÉNERGIE ÉLECTRIQUE

(30) Priorität: 12.07.2018 DE 102018211633
(43) Veröffentlichungstag der Anmeldung: 19.05.2021
(73) Patentinhaber: Triathlon Holding GmbH, 90602 Pyrbaum OT Seligenporten (DE); Industrie Elektronik Brilon GmbH, 59929 Brilon (DE)
(72) Erfinder: FIEDLER, Stefan, 59929 Brilon (DE); HARTMANN, Martin, 90763 Fürth (DE)
(74) Vertreter: Rau, Schneck & Hübner Patentanwälte Rechtsanwälte PartGmbB
(86) Internationale Anmeldenummer: PCT/EP2019/068610
(87) Internationale Veröffentlichungsnummer: WO 2020/011884

(56) Entgegenhaltungen:
- EP-A1- 2 645 514
- EP-A2- 2 131 469
- WO-A1-2010/120551
- WO-A1-2013/102894
- DE-A1-102013 205 496
- DE-A1-102015 114 002
- JP-A- 2017 046 398
- US-A1- 2009 091 291
- US-B2- 9 685 798

## Beschreibung

Die vorliegende Patentanmeldung nimmt die Priorität der deutschen Patentanmeldung DE 10 2018 211 633.4 in Anspruch.

Die Erfindung betrifft ein Verfahren und eine Vorrichtung zum Aufladen elektrischer Energiespeicher, insbesondere zum Aufladen von Batterien für mobile Industrieapplikationen, insbesondere Antriebsbatterien für innerbetriebliche Flurförderzeuge. Die Erfindung betrifft insbesondere ein Verfahren und eine Vorrichtung zum Aufladen elektrischer Energiespeicher im Niedervoltbereich, insbesondere im Niedervoltbereich bis 120 V.

Verfahren und Vorrichtungen zum Aufladen von elektrischen Energiespeichern sind bekannt. Sie werden beispielsweise zum Aufladen von Antriebsbatterien für innerbetriebliche Flurförderzeuge verwendet. Beim Aufladen können Lastspitzen auftreten. Derartige Lastspitzen treten insbesondere zu bestimmten Tageszeiten auf, beispielsweise bei Schichtwechseln, an welchen eine Vielzahl elektrischer Energiespeicher, insbesondere eine Vielzahl von Antriebsbatterien, aufgeladen werden soll. Beispielhafte Vorrichtungen und Verfahren zum Aufladen von elektrischen Energiespeichern sind bekannt aus DE 10 2013 205 496 A1, EP 2 131 469 A2, EP 2 645 514 A1, JP 2017-046398 A, WO 2010/120551 A1, US 2009/091291 A1, WO 2013/102 894 A1, US 9,685,798 B2 und DE 10 2015 114 002 A1.

Es ist eine Aufgabe der vorliegenden Erfindung, ein verbessertes Verfahren zum Aufladen elektrischer Energiespeicher anzugeben, insbesondere ein Verfahren bereitzustellen, mit welchem unerwünschte Lastspitzen reduziert werden können.

Diese Aufgabe wird gelöst durch ein Verfahren mit den in Anspruch 1 angegebenen Schritten. Zunächst werden mindestens zwei aufzuladende elektrische Energiespeicher an jeweils ein Ladegerät angeschlossen. Die mindestens zwei elektrischen Energiespeicher werden mit einer dem jeweiligen Ladegerät zugeordneten Ladeleistung aufgeladen. Der Kern der Erfindung besteht darin, dass die Ladeleistungen geregelt werden. Hierzu wird die momentane Ladeleistung jedes Ladegeräts bestimmt. Die momentanen Ladeleistungen werden aufsummiert zu einer momentanen Gesamt-Ladeleistung, die mit einer vordefinierten oberen Ladeleistungsgrenze verglichen wird. Wenn die momentane Gesamt-Ladeleistung größer als die vordefinierte obere Ladeleistungsgrenze ist, wird mindestens eine der den jeweiligen Ladegeräten zugeordneten Ladeleistungen verringert. Die Verringerung mindestens einer der Ladeleistungen limitiert die Gesamt-Ladeleistung. Hierdurch sind unerwünschte Lastspitzen auch zu Zeiten hoher Lastanforderungen, beispielsweise bei Schichtwechseln, reduziert und insbesondere verhindert. Beispielsweise kann die Gesamt-Ladeleistung zuverlässig unterhalb einer Netzanschlussleistung gehalten werden. Dies erhöht die Sicherheit und verringert die laufenden Kosten beim Aufladen der elektrischen Energiespeicher.

Die Ladeleistungen der jeweiligen Ladegeräte sind proportional zu dem den jeweiligen Ladegeräten zugeordneten Ladestrom. Dieser Ladestrom setzt sich aus dem Strom zur Versorgung des Ladegeräts und der pro Zeiteinheit an den elektrischen Energiespeicher abgegebenen elektrischen Ladung zusammen.

Die Ladeleistungen und damit auch die Gesamt-Ladeleistung sind Regelgrößen des erfindungsgemäßen Verfahrens. Die momentanen Ladeleistungen sowie die hieraus berechnete momentane Gesamt-Ladeleistung sind die zu bestimmenden Istgrößen. Die obere Ladeleistungsgrenze stellt einen Grenzwert für die Regelung dar.

Das Regeln der Ladeleistungen erfolgt abhängig von Ladezuständen der jeweiligen elektrischen Energiespeicher. Die Effizienz des Aufladens eines elektrischen Energiespeichers kann von dem jeweiligen Ladezustand abhängen. Das Einbeziehen der Ladezustände als Istgröße in die Regelung gewährleistet ein besonders effizientes Aufladen der elektrischen Energiespeicher. Der jeweilige Ladezustand - auch State of Charge (SOC) genannt - kann in Prozent der Ladekapazität des jeweiligen elektrischen Energiespeichers gemessen werden. Die jeweiligen Ladezustände können beispielsweise zusammen mit den Ladeleistungen bestimmt, insbesondere ausgelesen werden.

Die elektrischen Energiespeicher werden je nach Ladezustand in verschiedene Prioritätsklassen eingeteilt.

Beim Überschreiten der oberen Ladeleistungsgrenze wird zunächst die Ladeleistung für mindestens einen der mindestens zwei elektrischen Energiespeicher verringert, dessen Ladezustand höher als der Ladezustand der anderen elektrischen Energiespeicher ist. Bei Einteilung der elektrischen Energiespeicher in verschiedene Prioritätsklassen werden elektrische Energiespeicher mit geringem Ladezustand in höhere Prioritätsklassen eingeteilt als solche mit hohem Ladezustand. Ein derartiges Verfahren ist besonders effizient, insbesondere da elektrische Energiespeicher bei niedrigem Ladezustand mit geringen Leistungsverlusten geladen werden können. Die Priorisierung elektrischer Energiespeicher mit geringem Ladezustand gewährleistet zudem, dass in möglichst kurzer Zeit alle aufzuladenden elektrischen Energiespeicher auf einen Mindest-Ladezustand, beispielsweise 30 % der jeweiligen Ladekapazität, aufgeladen werden. Somit kann ein Engpass an elektrischen Energiespeichern zumindest kurzzeitig überbrückt werden.

Bevorzugt wird die Ladeleistung mindestens eines der elektrischen Energiespeicher dynamisch gedrosselt und/oder umverteilt, wenn die obere Ladeleistungsgrenze überschritten wird. Die Priorisierung, insbesondere die Einteilung in verschiedene Prioritätsklassen, garantiert insbesondere eine höchstmögliche Effizienz der zu ladenden elektrischen Energiespeicher. Der oder die elektrischen Energiespeicher mit dem niedrigsten Ladezustand bekommen die größte Ladeleistung zugeteilt. Vorteilhafterweise wird die Maximal-Ladeleistung nicht überschritten und gleichzeitig die schnellstmögliche Aufladung der elektrischen Energiespeicher erwirkt.

Das Regeln kann in mehreren Regelkreisen, insbesondere in sich periodisch wiederholenden Regelkreisen erfolgen. Beispielsweise können die Ladeleistungen der einzelnen Ladegeräte nacheinander bestimmt, insbesondere ausgelesen werden. Das Auslesen der Ladegeräte erfolgt bevorzugt mittels eines Multiplex-Verfahrens. Nach dem Auslesen der einzelnen Ladegeräte kann dann ein Regelschritt erfolgen. Die im Regelschritt bestimmten Sollgrößen können während des Regelschritts an die Ladegräte übermittelt werden. Bevorzugt jedoch werden die Sollgrößen während des Auslesens der Ladeleistungen im nächsten Regelkreis an die Ladegeräte übermittelt. Ein derartiges paralleles Übermitteln und Auslesen ist besonders effizient und kann bevorzugt mittels des Multiplex-Verfahrens realisiert werden.

Beispielsweise können zwei aufeinanderfolgende Regelkreise einen festen zeitlichen Abstand haben. Insbesondere beim sequenziellen Auslesen der Ladegeräte kann der zeitliche Abstand der Regelkreise von der Anzahl der Ladegeräte abhängen. Der Regelkreis wiederholt sich bevorzugt nach dem sequenziellen Auslesen aller Ladegeräte und dem Regelschritt. Eine durch die periodische Wiederholung des Regelkreises bestimmte Periodendauer kann sich insbesondere durch das Produkt der Anzahl der Ladegeräte mal eine Auslesedauer, die für die Bestimmung der Ladeleistung eines einzelnen Ladegeräts benötigt wird, ergeben. Die Periodendauer ist invers proportional zu einer Abtastrate, die durch die sich wiederholenden Regelkreise realisiert wird. Die Auslesedauer kann für alle Ladegeräte gleich sein und insbesondere zwischen 10 ms und 100 ms, insbesondere zwischen 20 ms und 50 ms, bevorzugt etwa 25 ms betragen. Hierdurch ist eine schnelle und gleichzeitig präzise Bestimmung der Ladeleistungen der jeweiligen Ladegeräte möglich.

Die Verminderung der Ladeleistung mindestens eines der Ladegeräte kann kontinuierlich oder in festgelegten Leistungsstufen erfolgen. Hierbei ist insbesondere auch möglich, dass einzelne der Ladegeräte temporär abgeschaltet werden.

Die Durchführung des Verfahrens, insbesondere der Regelkreis kann über eine Regeleinheit erfolgen. Die Regeleinheit kann mit den jeweiligen Ladegeräten in datenübertragender Weise verbunden sein. Die Regeleinheit kann beispielsweise die momentanen Istgrößen von den Ladegeräten auslesen und Regelbefehle an die jeweiligen Ladegeräte übermitteln.

Die Ladegeräte können getrennt voneinander vorliegen oder auch nur einzelne Anschlüsse einer gemeinsamen Ladestation sein. Die Ladegeräte können in unterschiedlichen Ladegerätgruppen zu je mindestens zwei Ladegeräten zusammengefasst sein, wobei für jede Ladegerätgruppe eine erste obere Ladeleistungsgrenze vorgegeben sein kann. Die oberen Ladeleistungsgrenzen der einzelnen Ladegerätgruppen ergeben in Summe eine Gesamt-Ladeleistungsgrenze. Alternativ kann auch vorgesehen sein, dass nur die obere Gesamt-Ladeleistungsgrenze vorgegeben ist. Die Ladegeräte eignen sich insbesondere zum Laden von Antriebsbatterien für innerbetriebliche Flurförderzeuge, insbesondere Hubstapler und/oder Gabelstapler. Die einzelnen Ladegeräte können jedoch auch zum Laden unterschiedlicher Arten elektrischer Energiespeicher verwendet werden.

Unter elektrische Energiespeicher werden alle bekannten Speichereinrichtungen für elektrische Energie verstanden. Bevorzugt handelt es sich bei den elektrischen Energiespeichern um Batterien, insbesondere um Batterien für mobile Industrieapplikationen, insbesondere Antriebsbatterien für innerbetriebliche Flurförderzeuge. Bevorzugt wird mindestens einer der aufzuladenden Energiespeicher, insbesondere eine der Batterien, insbesondere eine der Antriebsbatterien, zum Aufladen aus dem jeweiligen mit Strom zu versorgenden Gerät, insbesondere der jeweiligen mobilen Industrieapplikation, insbesondre aus dem jeweiligen innerbetrieblichen Flurförderzeug, entnommen. Das Verfahren kann insbesondere einen Entnahmeschritt zur Entnahme der aufzuladenden Energiespeicher aus einem jeweils mit Strom zu versorgenden Gerät, insbesondere aus der jeweiligen mobilen Industrieapplikation, insbesondere aus dem jeweiligen innerbetrieblichen Flurförderzeug, aufweisen.

Unter dem Anschließen der elektrischen Energiespeicher an jeweils ein Ladegerät sei das Erstellen einer Verbindung zum Energieübertrag von dem Ladegerät auf den elektrischen Energiespeicher verstanden. Dies kann auf alle bekannten Arten erfolgen. Beispielsweise kann eine elektrische Verbindung über ein Stromkabel und/oder einen Steckerkontakt hergestellt werden. Alternativ kann eine Drahtlosverbindung zum Drahtlos-Laden der elektrischen Energiespeicher vorgesehen sein.

Bevorzugt erfolgt das Aufladen der elektrischen Energiespeicher über ein Gleichstromladeverfahren. Der Anschluss der elektrischen Energiespeicher erfolgt insbesondere über einen Gleichstromanschluss.

Besonders bevorzugt erfolgt das Aufladen der elektrischen Energiespeicher im Niedervoltbereich, insbesondere im Niedervoltbereich bis 120 V. Die Spannung im Niedervoltbereich bis 120 V wird auch als Kleinspannung bezeichnet.

Gemäß einer bevorzugten Ausführungsform des Verfahrens beträgt die obere Ladeleistungsgrenze zwischen 75 % und 99,5 %, insbesondere zwischen 80 % und 99 %, insbesondere zwischen 85 % und 95 %, bevorzugt etwa 90 % einer Maximal-Ladeleistung. Durch das Wählen einer derartigen oberen Ladeleistungsgrenze wird das Überschreiten der Maximal-Ladeleistung zuverlässig vermieden. Hierdurch ist ein sicheres, Lastspitzen zuverlässig verhinderndes Auflade-Verfahren gewährleistet. Die Maximal-Ladeleistung kann beispielsweise einer Netzanschlussleistung, die zum Aufladen der elektrischen Energiespeicher zur Verfügung steht, entsprechen.

Die gewählte obere Ladeleistungsgrenze ermöglicht neben dem sicheren Durchführen des Aufladens auch eine gute Auslastung der zur Verfügung stehenden Maximal-Ladeleistung.

Die Maximal-Ladeleistung kann beispielsweise durch den Energieversorger, einen Energieliefervertrag, innerbetriebliche Stromversorgungsinfrastrukturen und/oder betriebliche Vorgaben vorgegeben sein. Die obere Ladeleistungsgrenze ist kleiner als die Maximal-Ladeleistung. Sie wird insbesondere durch die Maximal-Ladeleistung abzüglich eines Sicherheits-Offsets bestimmt.

Gemäß einer weiteren bevorzugten Ausführungsform des Verfahrens wird mindestens eine der Ladeleistungen stufenweise von einer Nennleistung, die für das Aufladen des jeweiligen elektrischen Energiespeichers vorgesehen ist, verringert. Das stufenweise Verringern der mindestens einen Ladeleistung gewährleistet ein effektives, reaktionsschnelles und sicheres Verfahren. Beispielsweise können zum Betrieb der Ladegeräte verschiedene Leistungsstufen, die von der jeweiligen Nennleistung abhängen, herangezogen werden.

Die Nennleistung kann von dem elektrischen Energiespeicher und/oder dem jeweiligen Ladegerät abhängen. Sie kann für alle aufzuladenden elektrischen Energiespeicher gleich oder auch unterschiedlich sein. Die Nennleistung kann zentral, beispielsweise in einer Regeleinheit, gespeichert sein. Alternativ kann die Nennleistung zusammen mit den momentanen Ladeleistungen beim Regeln bestimmt, insbesondere von dem jeweiligen Ladegerät ausgelesen werden.

Gemäß einem weiteren bevorzugten Aspekt der Erfindung wird mindestens eine der Ladeleistungen erhöht, sobald die momentane Gesamt-Ladeleistung eine untere Ladeleistungsgrenze unterschreitet, wobei die untere Ladeleistungsgrenze kleiner als die obere Ladeleistungsgrenze ist. Hierdurch wird ein sicheres und zugleich schnelles Aufladen gewährleistet. Insbesondere wird die Maximal-Leistung effektiv ausgeschöpft, ohne dass ein Überschreiten der Maximal-Leistung droht. Die untere Ladeleistungsgrenze wird beispielsweise durch die Maximal-Leistung abzüglich eines Auslastungs-Offsets bestimmt.

Bevorzugt wird eine Ladeleistung, die aufgrund des Regelns der Ladeleistungen zuvor verringert wurde, beim Unterschreiten der unteren Ladeleistungsgrenze erhöht. Die Erhöhung der Ladeleistung erfolgt bevorzugt wie deren Verringerung stufenweise bis zu der jeweiligen Nennleistung. Hierzu kann vorgesehen sein, dass die Leistungsstufen, mit denen die Ladegeräte jeweils betrieben werden, zusammen mit den momentanen Ladeleistungen bestimmt, insbesondere ausgelesen werden.

Gemäß einem weiteren vorteilhaften Aspekt der Erfindung beträgt die untere Ladeleistungsgrenze zwischen 50 % und 95 %, insbesondere zwischen 60 % und 90 %, insbesondere zwischen 70 % und 80 %, bevorzugt etwa 75 % der Maximal-Ladeleistung. Dies ermöglicht eine besonders effektive Auslastung der Maximal-Ladeleistung. In einer besonders bevorzugten Ausführungsform des Verfahrens bestimmt sich die untere Ladeleistungsgrenze durch die Differenz zwischen der oberen Ladeleistungsgrenze abzüglich der Nennleistung einer oder mehrerer der Ladegeräte. Dieses Vorgehen ist insbesondere von Vorteil, wenn mit dem Verfahren mehr als zwei Ladegeräte, insbesondere mehr als drei Ladegeräte, insbesondere mehr als vier Ladegeräte, insbesondere mehr als fünf Ladegeräte, insbesondere mehr als 10 Ladegeräte mit jeweils gleicher Nennleistung aufgeladen werden. In einem derartigen Fall kann insbesondere vorgesehen sein, dass die untere Ladeleistungsgrenze gleich der oberen Ladeleistungsgrenze minus zweimal der Nennleistung eines der Ladegeräte ist.

Gemäß einem weiteren bevorzugten Aspekt der Erfindung werden die obere Ladeleistungsgrenze und/oder die untere Ladeleistungsgrenze variabel, insbesondere uhrzeitabhängig festgelegt. Ein derartiges Aufladeverfahren ist besonders kostengünstig und flexibel. Beispielsweise kann ein Nutzer die obere und/oder die untere Ladeleistungsgrenze manuell vorgeben. Alternativ oder zusätzlich kann eine variable, insbesondere verbrauchs- oder uhrzeitabhängige, Maximal-Ladeleistung vorgegeben werden, wobei sich die Ladeleistungsgrenzen an der variablen Maximal-Ladeleistung orientieren. Weiterhin können das Sicherheits-Offset und/oder das Auslastungs-Offset anforderungsspezifisch variiert werden.

Gemäß einem weiteren bevorzugten Aspekt der Erfindung wird ein zeitlicher Verlauf der bisher bestimmten Ladeleistungen ermittelt. Der zeitliche Verlauf kann beispielsweise einem Nutzer an einem externen Gerät und/oder an der Regeleinheit angezeigt werden. Der ermittelte zeitliche Verlauf wird auch als "Trending" bezeichnet. Dies ermöglicht eine genaue Überwachung und nutzerseitige Kontrolle des Aufladeverfahrens. Das Aufladeverfahren, insbesondere das Anschließen weiterer Energiespeicher, ist besonders gut planbar. Dies erhöht die Sicherheit beim Aufladen der elektrischen Energiespeicher.

Besonders bevorzugt erfolgt das Trending auch für die weiteren Betriebsparameter, wie beispielsweise die momentanen Ladezustände, Prioritätsklassen und/oder Leistungsstufen. Hierdurch ist eine umfassende Kontrolle und Analyse des Aufladeverfahrens durch einen Nutzer möglich.

Es ist eine weitere Aufgabe der Erfindung, eine verbesserte Vorrichtung zum Aufladen elektrischer Energiespeicher bereitzustellen, insbesondere eine Vorrichtung zu schaffen, mit der Leistungsspitzen reduziert werden können.

Diese Aufgabe wird gelöst durch eine Vorrichtung mit den in Anspruch 9 angegebenen Merkmalen. Die Vorrichtung umfasst mindestens zwei Ladegeräte zum Aufladen je eines elektrischen Energiespeichers mit je einer dem jeweiligen Ladegerät zugeordneten Ladeleistung. Zudem ist eine Regeleinheit vorgesehen. Die Regeleinheit ist dazu ausgelegt, beim Aufladen von mindestens zwei elektrischen Energiespeichern, die jeweils an einem der mindestens zwei Ladegeräte angeschlossen sind, die Ladeleistungen der jeweiligen zum Aufladen verwendeten Ladegeräte nach dem oben beschriebenen Verfahren zu regeln. Die Vorteile der Vorrichtung ergeben sich aus den Vorteilen des oben beschriebenen Verfahrens.

Die Vorrichtung kann eine große Anzahl von Ladegeräten aufweisen. Bevorzugt werden über alle Ladegeräte elektrische Energiespeicher aufgeladen. Es ist jedoch auch möglich, dass einzelne der in der Vorrichtung enthaltenen Ladegeräte nicht zum Aufladen eines elektrischen Energiespeichers genutzt werden. Die nicht genutzten Ladegeräte verbrauchen keine Ladeleistung und werden nicht in die Regelung einbezogen.

Die elektrischen Energiespeicher sind nicht Teil der Vorrichtung, sondern lediglich zum Zwecke deren Aufladung an die Ladegeräte der Vorrichtung anschließbar. Die Regelung mittels der Regeleinheit erfolgt sobald mindestens zwei elektrische Energiespeicher an jeweils einem der Ladegeräte der Vorrichtung angeschlossen sind. Beispielsweise sind die elektrischen Energiespeicher über einen Anschluss am jeweils mit Strom zu versorgenden Gerät, insbesondere an der jeweiligen mobilen Industrieapplikation, insbesondere an dem jeweiligen innerbetrieblichen Flurförderzeug, an die Ladestationen anschließbar. Bevorzugt werden die elektrischen Energiespeicher zum Anschließen an die Ladegeräte aus dem jeweiligen Gerät, insbesondere der jeweiligen mobilen Industrieapplikation, insbesondere dem jeweiligen innerbetrieblichen Flurförderzeug, entnommen.

Bevorzugt ist die Vorrichtung zum Durchführen eines Gleichstromladeverfahrens geeignet. Insbesondere weisen die Ladegeräte einen Gleichstromanschluss zum Anschließen eines elektrischen Energiespeichers auf.

Bevorzugt ist die Vorrichtung zum Aufladen elektrischer Energiespeicher im Niedervoltbereich, insbesondere im Niedervoltbereich bis 120 V ausgelegt.

Gemäß einer bevorzugten Ausführungsform der Vorrichtung ist eine Schnittstelle zur Eingabe von Betriebsparametern vorgesehen. Über die Schnittstelle können beispielsweise die Maximal-Ladeleistung und die obere bzw. untere Ladeleistungsgrenze eingegeben werden. Die Schnittstelle stellt bevorzugt eine Verbindung über ein Netzwerk, insbesondere Drahtlos-Netzwerk zu der Regeleinheit zur Verfügung. Somit kann die Eingabe beispielsweise an einem Nutzergerät über eine App oder einen Webbrowser erfolgen. Alternativ kann die Schnittstelle zum Anschlie-ßen dedizierter Eingabegeräte, beispielsweise einer Tastatur oder einer Touch-Eingabefeld, an der Regeleinheit ausgelegt sein.

Gemäß einer weiteren bevorzugten Ausführungsform der Vorrichtung sind mindestens zwei Ladegerätgruppen mit jeweils mindestens zwei Ladegeräten vorhanden, wobei die Regelung der Ladeleistungen für beide Ladegerätgruppen unabhängig voneinander erfolgt. Insbesondere werden für jede Ladegerätgruppe eine eigene Maximal-Ladeleistung und eine eigene obere und/oder untere Ladeleistungsgrenze vorgegeben. Die Gesamt-Ladeleistung wird für jede Ladegerätgruppe unabhängig ermittelt. Das Vorsehen unterschiedlicher Ladegerätgruppen ermöglicht eine hohe Flexibilität der Vorrichtung. Beispielsweise können die unterschiedlichen Ladegerätgruppen unterschiedlichen Stromanschlüssen zugeordnet sein. Auch können mit den unterschiedlichen Ladegerätgruppen unterschiedliche Arten von elektrischem Energiespeicher geladen werden. Die Ladegeräte der Vorrichtung sind in die unterschiedlichen Ladegerätgruppen eingeteilt. Diese Einteilung kann fest vorgegeben oder variabel sein. Beispielsweise können je nach aufzuladenden Energiespeichern und vorhandenen Stromanschlüssen unterschiedliche Ladegerätgruppen gebildet werden, um vorgegebene Netzanschlussspannungen optimal auszunutzen.

Gemäß einem weiteren bevorzugten Aspekt der Erfindung ist die Vorrichtung modular aufgebaut. Dies bedeutet, dass beispielsweise die Anzahl der Ladegeräte und/oder Ladegerätgruppen flexibel an den jeweiligen Bedarf angepasst werden kann. Die Vorrichtung ist insbesondere erweiterbar. Zudem ermöglicht ein modularer Aufbau ein leichtes Austauschen defekter und/oder veralteter Ladegeräte.

Zum Bereitstellen einer modularen Vorrichtung kann beispielsweise vorgesehen sein, dass die Regeleinheit nicht direkt, sondern über eine Datenverbindung mit den Ladegeräten verbunden ist. Als besonders geeignet hat sich hierbei eine Drahtlos-Datenverbindung, insbesondere eine WLAN-Verbindung, erwiesen. Besonders bevorzugt wird ein WPAN (Wireless Private Area Network), insbesondere ein 868 MHz WPAN für die drahtlose Kommunikation zwischen den Ladegeräten und der Regeleinheit verwendet. Alternativ zu der Drahtlos-Datenverbindung kann eine drahtgebundene Datenverbindung, insbesondere nach dem RS485-Standard zum Einsatz kommen. Dies ermöglicht einen besonders flexiblen Aufbau der Vorrichtung. Insbesondere kann die Anordnung der Ladegeräte und der Regeleinheit an die jeweiligen räumlichen Gegebenheiten angepasst werden.

Nachfolgend werden unter Bezugnahme auf die beigefügten Zeichnungen bevorzugte Ausführungsformen der Erfindung beispielhaft beschrieben. Dabei zeigen:
- Fig. 1: Eine schematische Darstellung einer modularen Vorrichtung zum Aufladen elektrischer Energiespeicher,
- Fig. 2: einen schematischen Verfahrensablauf zum Aufladen elektrischer Energiespeicher, und
- Fig. 3: einen zeitlichen Verlauf der Ladeleistungen beim Aufladen dreier elektrischer Energiespeicher gemäß dem Verfahren gemäß Fig. 2.

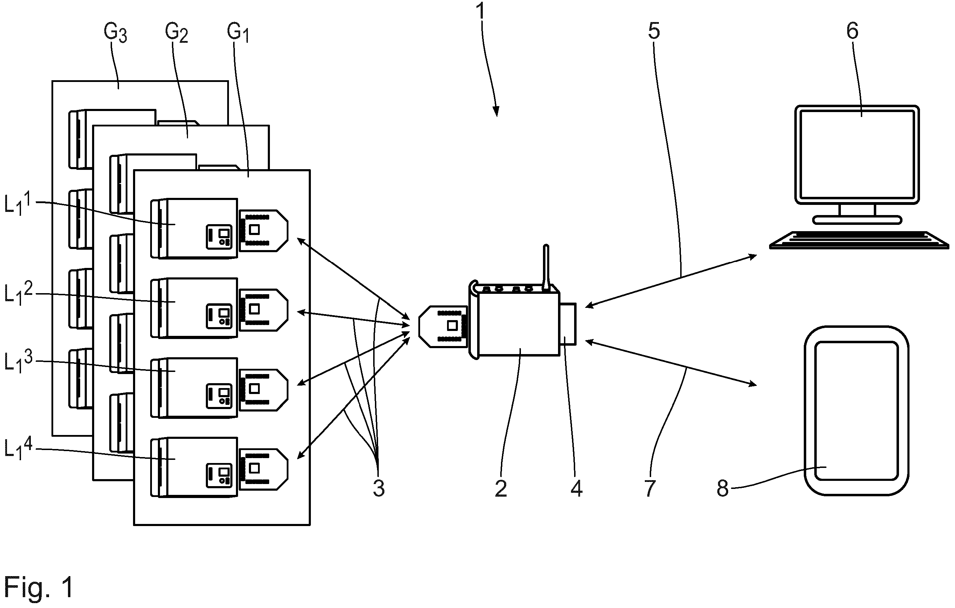

Fig. 1 zeigt einen schematischen Aufbau einer Ladevorrichtung 1 zum Aufladen elektrischer Energiespeicher. Zentrale Komponente der Ladevorrichtung 1 ist eine Regeleinheit 2. Bei der Regeleinheit 2 handelt es sich um eine sogenannte NBG-Steuereinheit.

Die Ladevorrichtung 1 umfasst eine Mehrzahl von Ladegeräten Lⱼⁱ, die in verschiedene Ladegerätgruppen Gⱼ unterteilt sind. Der Index j=1, 2, ... nummeriert hierbei die unterschiedlichen Ladegerätgruppen Gⱼ durch. Das Ladegerät Lⱼⁱ ist der Ladegerätgruppe Gⱼ zugeordnet. Der Index i=1, 2, ... nummeriert die Ladegeräte Lⱼⁱ in der jeweiligen Ladegerätgruppe Gⱼ durch. Die in der Fig. 1 gezeigte Ladevorrichtung 1 weist drei Ladegerätgruppen Gⱼ (j = 1, 2, 3) mit jeweils vier Ladegeräten Lⱼⁱ (i = 1, 2, 3, 4) auf. Selbstverständlich sind auch Ausführungsbeispiele mit mehr oder weniger, insbesondere nur einer Ladegerätgruppe Gⱼ denkbar. Zudem können unterschiedliche Anzahlen von Ladegeräten Lⱼⁱ je Ladegerätgruppe Gⱼ vorgesehen sein. Die einzelnen Ladegeräte Lⱼⁱ sind unabhängig voneinander als unterschiedliche Bauteile ausgeführt. In anderen Ausführungsbeispielen können zumindest einige der Ladegräte Lⱼⁱ einzelne Anschlüsse einer gemeinsamen Ladestation ausgeführt sein.

Die einzelnen Ladegeräte Lⱼⁱ sind über die Datenverbindungen 3 jeweils mit der Regeleinheit 2 in datenübertragenderweise verbunden. Die Datenverbindung 3 dient zum Übertragen von Betriebsdaten der Ladegeräte Lⱼⁱ an die Regeleinheit 2 sowie von Regelbefehlen von der Regeleinheit 2 an die jeweiligen Ladegeräte Lⱼⁱ. Bei den Datenverbindungen 3 kann es sich um konventionelle drahtgebundene Datenverbindungen, beispielsweise nach dem RS485-Standard, handeln. Alternativ wird die Datenverbindung 3 drahtlos bereitgestellt. Dies kann über beliebige Nah- oder Fernkommunikationsmittel, wie beispielsweise Bluetooth, W-LAN oder Mobilfunknetze erfolgen. In den bevorzugten Ausführungsbeispielen erfolgt die drahtlose Datenverbindung über ein 868 MHz WPAN.

Aufgrund der flexibel ausgestaltbaren Datenverbindungen 3 können die Ladegeräte Lⱼⁱ flexibel mit der Regeleinheit 2 verbunden werden. Auf diese Weise können mehr oder weniger Ladegeräte Lⱼⁱ mit der Regeleinheit 2 verbunden werden. Aufgrund der flexiblen Ausgestaltung weist die Ladevorrichtung 1 einen modularen Aufbau auf. Die Ladevorrichtung 1 ist flexibel für das Aufladen unterschiedlicher Anzahlen elektrischer Energiespeicher nutzbar.

Das Aufladen der elektrischen Energiespeicher erfolgt derart, dass die Ladegeräte Lⱼⁱ, an die je ein Energiespeicher angeschlossen ist, den betreffenden Energiespeicher mit einer dem jeweiligen Ladegerät Lⱼⁱ zugeordneten Ladeleistung pⱼⁱ aufladen. Die Ladeleistung pⱼⁱ entspricht der Leistungsaufnahme des jeweiligen Ladegeräts Lⱼⁱ zum Aufladen des Energiespeichers. Die Ladeleistung pⱼⁱ ist proportional zu einem Ladestrom, der sich wiederum aus dem Strom zur Versorgung des jeweiligen Ladegeräts Lⱼⁱ und der pro Zeiteinheit auf den elektrischen Energiespeicher übertragenen Ladeleistung zusammensetzt. Die Ladeleistung pⱼⁱ ist kleiner oder gleich einer Nennleistung Nⱼⁱ, die für das Aufladen des jeweiligen elektrischen Energiespeichers vorgesehen ist.

Die Ladegeräte Lⱼⁱ sind zum Aufladen von Antriebsbatterien für innerbetriebliche Flurförderzeuge ausgeführt. Für das Aufladen der Antriebsbatterien sind hohe Ladeströme erforderlich, d.h. die jeweiligen Ladeleistungen pⱼⁱ und Nennleistungen Nⱼⁱ sind hoch. Zu bestimmen Zeiten, insbesondere bei Schichtwechseln, können Lastspitzen auftreten, da viele der Ladegeräte Lⱼⁱ gleichzeitig zum Aufladen von Antriebsbatterien verwendet werden. Diese Lastspitzen können Netzanschlussleistungen übersteigen. Dies kann zu hohen laufenden Kosten führen.

Um derartige Lastspitzen zu vermindern und zu vermeiden, regelt die Regeleinheit 2 das Aufladen der elektrischen Energiespeicher mittels der Ladegeräte Lⱼⁱ. Die Regelung erfolgt für die einzelnen Ladegerätgruppen Gⱼ unabhängig voneinander. Hierbei werden die momentanen Ladeleistungen pⱼⁱ der Ladegeräte Lⱼⁱ einer jeden Ladegerätgruppe Gⱼ aufaddiert zu einer Gesamt-Ladeleistung Pⱼ der jeweiligen Ladegerätgruppe Gⱼ. Durch die Regelung wird sichergestellt, dass die Gesamt Ladeleistung Pⱼ eine der jeweiligen Ladegerätgruppe Gⱼ zugewiesene Maximal-Ladeleistung Mⱼ nicht überschreitet. Für jede Ladegerätgruppe Gⱼ sind eine obere Ladeleistungsgrenze Oⱼ und eine untere Ladeleistungsgrenze Uⱼ definiert. Die Maximal-Ladeleistung Mⱼ, die obere Ladeleistungsgrenze Oⱼ und die untere Ladeleistungsgrenze Uⱼ sind Grenzwerte für die Regelung der Ladeleistungen pⱼⁱ.

Die Maximal-Ladeleistung Mⱼ ist im Regelfall eine von außen vorgegebene Obergrenze. Diese kann beispielsweise durch die Netzanschlussleistung gegeben sein. Die Ladeleistungsgrenzen Oⱼ, Uⱼ werden an die jeweilige Maximal-Ladeleistung Mⱼ angepasst und sind kleiner als diese. Die obere Ladeleistungsgrenze Oⱼ bestimmt sich regelmäßig durch die Maximal-Ladeleistung Mⱼ abzüglich eines Sicherheits-Offsets. Es hat sich als praktikabel erwiesen, wenn die obere Ladeleistungsgrenze Oⱼ zwischen 75 % und 99,5 %, insbesondere zwischen 80 % und 99 %, insbesondere zwischen 85 % und 95 %, bevorzugt etwa 90 % der Maximal-Ladeleistung beträgt. Die untere Ladeleistungsgrenze Uⱼ ist kleiner als die obere Ladeleistungsgrenze Oⱼ. Sie bestimmt sich aus der Maximal-Ladeleistung Mⱼ abzüglich eines Auslastungs-Offsets. Es hat sich als praktikabel erwiesen, die untere Ladeleistungsgrenze Uⱼ zwischen 50 % und 95 %, insbesondere zwischen 60 % und 90 %, insbesondere zwischen 70 % und 80 %, bevorzugt etwa bei 75 % der Maximal-Ladeleistung Mⱼ zu wählen.

Die Regeleinheit 2 weist eine Schnittstelle 4 auf. Über die Schnittstelle 4 können Betriebsparameter zum Aufladen der elektrischen Energiespeicher an die Regeleinheit 2 übergeben werden. Hierzu umfasst die Schnittstelle 4 eine LAN-Verbindung 5 zu einem Computer 6. Über den Computer 6 können die Betriebsparameter an die Regeleinheit 2 übergeben werden. Zudem können die Betriebsdaten ausgelesen und mittels des Computers 6 angezeigt werden. Zusätzlich oder alternativ zu der LAN-Verbindung 5 stellt die Schnittstelle 4 eine Drahtlos-Verbindung 7 zu einem mobilen Endgerät 8 bereit. Bei dem mobilen Endgerät 8 handelt es sich beispielsweise um ein Tablet oder ein Smartphone. Auch über das mobile Endgerät 8 können Betriebsparameter an die Regeleinheit 2 übermittelt und/oder Betriebsdaten von dieser ausgelesen werden. Die Betriebsparameter können uhrzeit- oder verbrauchsabhängig festgelegt werden. Sie umfassen die obere Ladeleistungsgrenze Oⱼ, die untere Ladeleistungsgrenze Uⱼ und die Maximal-Ladeleistung Mⱼ für jede Ladegerätgruppe Gⱼ. Die auslesbaren Betriebsdaten umfassen die momentanen Ladeleistungen pⱼⁱ, die momentane Gesamt-Ladeleistung Pⱼ und/oder Ladezustände Zⱼⁱ der jeweils aufzuladenden elektrischen Energiespeicher. Die Betriebsdaten können auf dem Computer 6 und/oder dem mobilen Endgerät 8 angezeigt und ausgewertet werden.

Die Grenzwerte Maximal-Ladeleistung Mⱼ, obere Ladeleistungsgrenze Oⱼ und untere Ladeleistungsgrenze Uⱼ sind für die einzelnen Ladegerätgruppen Gⱼ unabhängig voneinander festgelegt. Zudem regelt die Regeleinheit 2 das Auflade-Verfahren für die einzelnen Ladegerätgruppen Gⱼ unabhängig voneinander. Für die nähere Darstellung des Auflade-Verfahrens wird daher im Folgenden nur auf eine Ladegerätgruppe Gⱼ Bezug genommen.

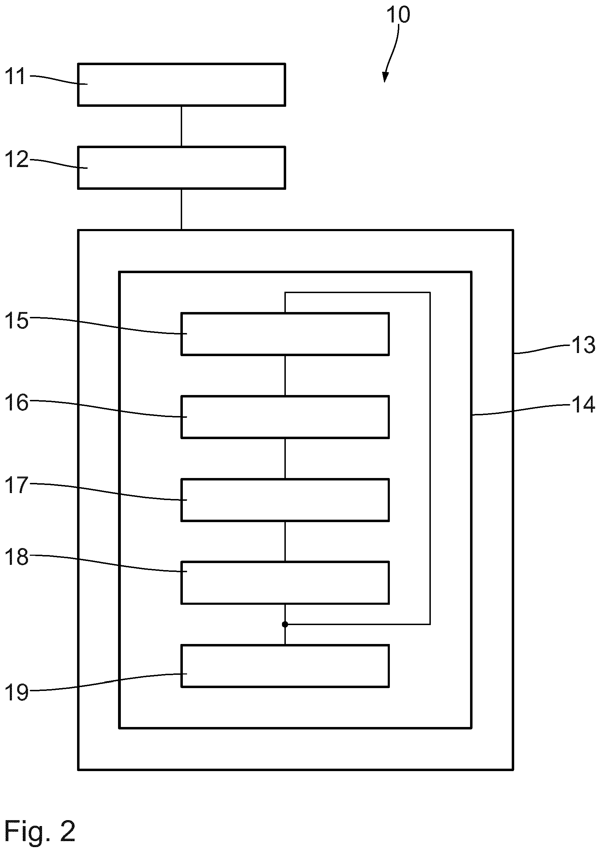

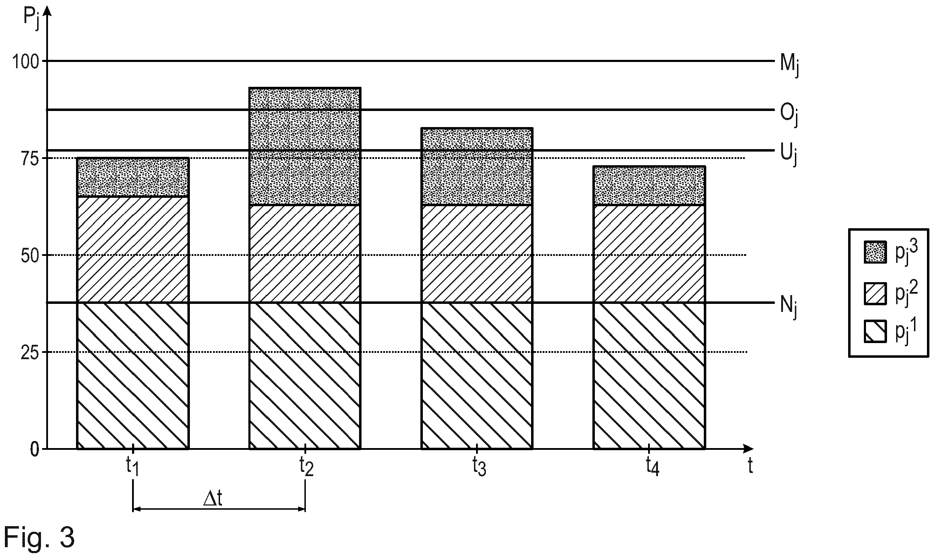

Mit Bezug auf die Fig. 2 und 3 wird im Folgenden das Verfahren zum Aufladen der elektrischen Energiespeicher im Detail beschrieben. Fig. 2 zeigt einen schematischen Ablauf eines Auflade-Verfahrens 10 mithilfe der Ladevorrichtung 1.

Zunächst werden in einem Kalibrierschritt 11 die Betriebsparameter für das Auflade-Verfahren 10 an die Steuereinheit 2 übergeben. Hierdurch werden die Grenzwerte Maximal-Ladeleistung Mⱼ, obere Ladeleistungsgrenze Oⱼ und untere Ladeleistungsgrenze Uⱼ festgelegt. Die Grenzwerte können beispielsweise über den Computer 6 oder das mobile Endgerät 8 eingegeben und über die Schnittstelle 4 an die Regeleinheit 2 übermittelt werden. Die vom Nutzer festgelegten Grenzwerte können variabel sein. Die Ladeleistungsgrenzen Oⱼ, Uⱼ sowie die Maximal-Ladeleistung Mⱼ können beispielsweise uhrzeitabhängig definiert werden. Hierdurch können tageszeitabhängige Energiekosten und/oder Netzanschlussleistungen berücksichtigt werden. Auch können betriebsbedingte anderweitige Lastspitzen durch die Festlegung einer geringeren Maximal-Ladeleistung Mⱼ und entsprechend geringerer Ladeleistungsgrenzen Oⱼ, Uⱼ berücksichtigt werden.

In einem sich an den Kalibrierschritt 11 anschließenden Anschlussschritt 12 werden die aufzuladenden elektrischen Energiespeicher an die jeweiligen Ladegeräte Lⱼⁱ angeschlossen. Unter Anschließen ist hierbei zu verstehen, dass eine Verbindung zum Energieübertrag von dem jeweiligen Ladegerät Lⱼⁱ an den jeweiligen elektrischen Energiespeicher erstellt wird. Dies ist im einfachsten Fall eine gewöhnliche Stromstecker-Verbindung. Alternativ kann auch eine Drahtlos-verbindung zum Drahtlos-Laden in dem Anschlussschritt 12 bereitgestellt werden. In weiteren, nicht dargestellten Ausführungsbeispielen wird vor dem Anschlussschritt 12 ein Entnahmeschritt durchgeführt, in welchem die elektrischen Energiespeicher aus dem jeweiligen innerbetrieblichen Flurförderzeug entnommen werden. In diesen Ausführungsbeispielen werden die elektrischen Energiespeicher unabhängig von den jeweiligen Flurförderzeugen an die Ladegeräte Lⱼⁱ angeschlossen.

Die im Anschlussschritt 12 an die jeweiligen Ladegeräte Lⱼⁱ angeschlossenen elektrischen Energiespeicher werden anschließend in einem Aufladeschritt 13 mit elektrischer Energie aufgeladen. Diesbezüglich sei angemerkt, dass keine strikte zeitliche Trennung zwischen dem Anschlussschritt 12 und dem Aufladeschritt 13 besteht. Vielmehr können in dem Anschlussschritt 12 auch weitere elektrische Energiespeicher an bisher ungenutzte Ladegeräte Lⱼⁱ angeschlossen werden, während der Aufladeschritt 13 bereits für andere elektrische Energiespeicher mithilfe der jeweiligen Ladegeräte Lⱼⁱ durchgeführt wird.

Während des Aufladeschritts 13 werden die elektrischen Energiespeicher mit der dem jeweiligen Ladegerät Lⱼⁱ zugeordneten Ladeleistung pⱼⁱ aufgeladen. Die jeweiligen Ladeleistungen pⱼⁱ werden während des Aufladeschritts 13 durch die Regeleinheit 2 in einem Regelkreis 14 geregelt.

Die elektrischen Energiespeicher werden in dem Aufladeschritt 13 von dem jeweiligen Ladegerät Lⱼⁱ vorzugsweise mit einer Ladeleistung pⱼⁱ, die der Nennleistung Nⱼⁱ entspricht, geladen. Das Aufladen erfolgt bevorzugt durch Gleichstromladen im Niedervoltbereich bis 120 V. Über den Regelkreis 14 kann die Regeleinheit 2 die Ladeleistung pⱼⁱ der jeweiligen Ladegeräte Lⱼⁱ unabhängig voneinander festlegen, insbesondere auf einen Wert unterhalb der Nennleistung Nⱼⁱ drosseln. Das Drosseln der Ladeleistungen pⱼⁱ der Ladegeräte Lⱼⁱ erfolgt in sechs Leistungsstufen Sⱼⁱ. Die Leistungsstufen Sⱼⁱ sind in der Tabelle 1 aufgelistet, wobei jeder Leistungsstufe Sⱼⁱ ein Prozentsatz der Nennleistung Nⱼⁱ zugeordnet wird. Der jeweilige Prozentsatz der Nennleistung Nⱼⁱ entspricht der Ladeleistung pⱼⁱ, mit der das jeweilige Ladegerät Lⱼⁱ den angeschlossenen elektrischen Energiespeicher gemäß der eingestellten Leistungsstufe Sⱼⁱ auflädt. Die höchste Leistungsstufe Sⱼⁱ = 5 entspricht einem Betrieb des Ladegeräts mit der Nennleistung Nⱼⁱ. Die niedrigste Leistungsstufe Sⱼⁱ = 0 entspricht einer temporären Abschaltung des Ladegeräts Lⱼⁱ bzw. einer Ladepause.

**Tabelle 1: Die den jeweiligen Leistungsstufen Sⱼⁱ zugeordneten Ladeleistungen pⱼⁱ in Prozent der jeweiligen Nennleistung Nⱼⁱ**

| **Leistungsstufe Sⱼⁱ** | **Ladeleistung pⱼⁱ in Prozent der Nennleistung Nⱼⁱ** |
|---|---|
| 0 | 0 |
| 1 | 10 |
| 2 | 25 |
| 3 | 50 |
| 4 | 75 |
| 5 | 100 |

Das Laden der an die jeweiligen Ladegeräte Lⱼⁱ angeschlossenen elektrischen Energiespeicher verläuft umso schneller, je höher die Leistungsstufe Sⱼⁱ ist, mit der das Ladegerät Lⱼⁱ betrieben wird. Zusätzlich hierzu beinflusst der aktuelle Ladezustand Zⱼⁱ des jeweiligen elektrischen Energiespeichers die Effizienz der Aufladung. Der Ladezustand Zⱼⁱ gibt an, zu wie viel Prozent der Ladekapazität der jeweilige Energiespeicher aufgeladen ist. Um ein möglichst effektives Laden zu gewährleisten, wird eine Einteilung der Ladegeräte Lⱼⁱ gemäß dem jeweiligen Ladezustand Zⱼⁱ der angeschlossenen elektrischen Energiespeicher in vier Prioritätsklassen vorgenommen. Die vier Prioritätsklassen sind in Tabelle 2 dargestellt. Ladegeräte der niedrigsten Prioritätsklasse (Prioritätsklasse 1) weisen einen hohen Ladezustand Zⱼⁱ auf. Demgegenüber ist der Ladezustand Zⱼⁱ für die höheren Prioritätsklassen, insbesondere die höchste Prioritätsklasse (Prioritätsklasse 4) niedriger.

**Tabelle 2: Einteilung der Ladegeräte Lⱼⁱ in Prioritätsklassen gemäß dem Ladezustand Zⱼⁱ des jeweils angeschlossenen Energiespeichers**

| **Prioritätsklasse** | **Ladezustand Zⱼⁱ** | **Minimale Leistungsstufe Sⱼⁱ** |
|---|---|---|
| 1 | 70 % bis 100 % | 1 |
| 2 | 50 % bis 70 % | 2 |
| 3 | 30 % bis 50 % | 3 |
| 4 | 0 % bis 30 % | 5 |

Je höher der Ladezustand Zⱼⁱ ist, desto weniger effektiv erfolgt das Aufladen des elektrischen Energiespeichers. Bei begrenzter Maximal-Ladeleistung Mⱼ ist es daher vorteilhaft, die elektrischen Energiespeicher mit niedrigem Ladezustand Zⱼⁱ bevorzugt mit hohen Ladeleistungen pⱼⁱ zu versorgen. Beispielsweise können die Ladegeräte Lⱼⁱ der Prioritätsklasse 1 in der Leistungsstufe Sⱼⁱ = 1 betrieben werden. Demgegenüber ist es vorteilhaft, Ladegeräte Lⱼⁱ der höchsten Prioritätsklasse (Prioritätsklasse 4) möglichst lange mit der jeweiligen maximalen Nennleistung Nⱼⁱ, d. h. Leistungsstufe Sⱼⁱ = 5, zu betreiben. Daher werden - falls eine Drosselung nötig ist - zunächst diejenigen Ladegeräte Lⱼⁱ gedrosselt, die der niedrigsten Prioritätsklasse zugeordnet sind. Erst wenn alle Ladegeräte Lⱼⁱ einer niedrigeren Prioritätsklasse auf einer der jeweiligen Prioritätsklasse zugeordneten minimalen Leistungsstufe Sⱼⁱ betrieben werden, erfolgt die Drosselung auch für Ladegeräte Lⱼⁱ höherer Prioritätsklassen. Die minimalen Leistungsstufen Sⱼⁱ für die jeweiligen Prioritätsklassen sind in Tabelle 2 angegeben.

Im Folgenden werden die einzelnen Schritte des Regelkreises 14 erläutert. Zunächst liest die Regeleinheit 2 in einem Ausleseschritt 15 momentane Betriebsdaten der Ladegeräte Lⱼⁱ aus. Hierbei wird über die Datenverbindung 3 die momentane Ladeleistung pⱼⁱ jedes Ladegeräts Lⱼⁱ bestimmt. Im Ausleseschritt 15 werden zudem die jeweils eingestellte Leistungsstufe Sⱼⁱ sowie die Nennleistung Nⱼⁱ und der Ladezustand Zⱼⁱ des an das Ladegerät Lⱼⁱ angeschlossenen elektrischen Energiespeichers an die Regeleinheit 2 übertragen. Bei den im Ausleseschritt 15 ausgelesenen momentanen Betriebsdaten handelt es sich um Istgrößen des Regelkreises.

In dem Ausleseschritt 15 werden die momentanen Ladeleistungen pⱼⁱ jedes Ladegeräts Lⱼⁱ nacheinander ausgelesen. Die Übertragung der momentanen Betriebsdaten erfolgt in einem Multiplex-Verfahren. Je Ladegerät Lⱼⁱ ist hierfür eine Auslesedauer vorgesehen. Die Auslesedauer beträgt für gewöhnlich 25 ms. In anderen Ausführungsbeispielen können auch andere Auslesedauern vorgesehen sein. Das Multiplex-Verfahren ermöglicht zudem, dass in dem Ausleseschritt 15 auch Daten, beispielsweise Sollgrößen, von der Regeleinheit 2 auf das jeweils ausgelesene Ladegerät Lⱼⁱ übertragen werden, wie dies im Folgenden noch beschrieben wird.

An den Ausleseschritt 15 schließt sich ein Berechnungsschritt 16 an. Im Berechnungsschritt 16 ermittelt die Regeleinheit 2 die momentane Gesamt-Ladeleistung Pⱼ, indem die momentanen Ladeleistungen pⱼⁱ aller Ladegeräte Lⱼⁱ einer Ladegerätgruppe Gⱼ aufsummiert werden.

In einem hierauf folgenden Vergleichsschritt 17 wird die im Berechnungsschritt 16 ermittelte momentane Gesamt-Ladeleistung Pⱼ mit den Grenzwerten obere Ladeleistungsgrenze Oⱼ, untere Ladeleistungsgrenze Uⱼ sowie der Maximal-Ladeleistung Mⱼ verglichen.

An den Vergleichsschritt 17 schließt sich ein Regelschritt 18 an. In dem Regelschritt 18 bestimmt die Regeleinheit 2 in Abhängigkeit von dem Ergebnis des Vergleichsschritts 17 nötige Anpassungen der Ladeleistungen pⱼⁱ. Im Regelschritt 18 werden die Sollgrößen der Regelung bestimmt.

Die bestimmten Sollgrößen können direkt im Regelschritt 18 an die jeweiligen Ladegeräte Lⱼⁱ übergeben werden. Bei dem in Fig. 2 dargestellten Aufladeverfahren 10 werden im Regelschritt 18 jedoch nur die Sollgrößen errechnet. Nach dem Regelschritt 18 wiederholt sich der Regelkreis 14, indem wiederum ein Ausleseschritt 15 durchgeführt wird. Ein Übermitteln der Sollgrößen im Regelschritt 18 an die Ladegeräte Lⱼⁱ ist im Regelschritt 18 daher nicht nötig. In dem Ausleseschritt 15 des nachfolgenden Regelkreises 14 kann aufgrund des hierzu verwendeten Mulitplex-Verfahrens neben dem Auslesen der momentanen Istgrößen auch ein Übermitteln der im Regelschritt 18 des vorhergehenden Regelkreises 14 ermittelten Sollgrößen erfolgen. Die Abtastrate wird hierdurch erhöht. Dies gewährleistet ein reaktionsschnelles und effizientes Regeln der Ladeleistungen pⱼⁱ.

Im Folgenden werden beispielhaft verschiedene von der Regeleinheit 2 getroffene Maßnahmen zur Anpassung der Ladeleistungen pⱼⁱ beschrieben.

Für den Fall, dass die momentane Gesamt-Ladeleistung Pⱼ größer als die obere Ladeleistungsgrenze Oⱼ ist, wird mindestens eine der den jeweiligen Ladegeräten Lⱼⁱ zugeordneten Ladeleistungen pⱼⁱ verringert. Dies bedeutet, dass die Leistungsstufe Sⱼⁱ mindestens eines der Ladegeräte Lⱼⁱ verringert wird. Hierdurch wird ein dauerhaftes Überschreiten der oberen Ladeleistungsgrenze Oⱼ konsequent verhindert. Die Drosselung erfolgt abhängig davon, um wie viel Prozent der Maximal-Ladeleistung Mⱼ die obere Ladeleistungsgrenze Oⱼ überschritten wird. Hierbei werden zunächst die Ladeleistungen pⱼⁱ derjenigen Ladegeräte Lⱼⁱ gedrosselt, die der niedrigsten Prioritätsklasse zugeordnet sind. Erst wenn alle Ladegeräte Lⱼⁱ der niedrigsten Prioritätsklasse auf der jeweiligen minimalen Leistungsstufe Sⱼⁱ betrieben werden, erfolgt die Drosselung auch für Ladegeräte Lⱼⁱ der nächsthöheren Prioritätsklasse.

Aufgrund der Drosselung wird die Maximal-Ladeleistung Mⱼ im Regelfall nicht erreicht bzw. überschritten. Sollte der Vergleichsschritt 17 ergeben, dass die Maximal-Leistung Mⱼ dennoch überschritten wurde, wird das Aufladen mit den Ladegeräten Lⱼⁱ der niedrigen Prioritätsstufen zunächst unterbrochen, indem die Leistungsstufe Sⱼⁱ = 0 eingestellt wird. Anschließend werden die Ladeleistungen pⱼⁱ der betreffenden Geräte schrittweise erhöht, wobei sichergestellt wird, dass die Maximal-Ladeleistung Mⱼ nicht überschritten wird.

Ergibt der Vergleichsschritt 17, dass die momentane Gesamt-Ladeleistung Pⱼ die untere Ladeleistungsgrenze Uⱼ unterschreitet, wird die Ladeleistung pⱼⁱ mindestens eines der Ladegeräte Lⱼⁱ erhöht, sofern nicht alle an einen aufzuladenden elektrischen Energiespeicher angeschlossenen Ladegeräte Lⱼⁱ bereits mit der jeweiligen Nennleistung Nⱼⁱ, d. h. der Leistungsstufe Sⱼⁱ = 5, betrieben werden. Gegebenenfalls wird die Ladeleistung pⱼⁱ zunächst derjenigen Ladegeräte Lⱼⁱ erhöht, die einer hohen Prioritätsklasse zugeordnet sind. Werden bereits alle Ladegeräte Lⱼⁱ mit der jeweiligen maximalen Nennleistung Nⱼⁱ betrieben, erfolgt keine Erhöhung der Ladeleistungen pⱼⁱ.

Ergibt der Vergleichsschritt 17, dass die momentane Gesamt-Ladeleistung Pⱼ kleiner oder gleich der oberen Ladeleistungsgrenze Oⱼ und gleichzeitig größer oder gleich der unteren Ladeleistungsgrenze Uⱼ ist (Oⱼ > Pⱼ > Uⱼ), werden die Ladeleistungen pⱼⁱ der Ladegeräte Lⱼⁱ unverändert beibehalten.

Nach dem Regelschritt 18 wiederholt sich der Regelkreis 14, indem wiederum ein Ausleseschritt 15 durchgeführt wird. Der Regelkreis 14 wiederholt sich während des gesamten Aufladeschritts 13 periodisch. Der Regelkreis 14 wird hierbei mit einem festen zeitlichen Abstand Δt wiederholt. Der zeitliche Abstand Δt ist von der Anzahl der Ladegeräte Lⱼⁱ abhängig. Der zeitliche Abstand Δt ergibt sich aus der Anzahl der Ladegeräte Lⱼⁱ multipliziert mit der Auslesedauer, die für das Auslesen jedes Ladegeräts benötigt wird. Der zeitliche Abstand entspricht einer Periodendauer, wodurch sich auch eine durch die periodische Wiederholung des Regelkreises 14 realisierte Abtastrate ergibt.

In Fig. 3 ist der zeitliche Verlauf der Gesamt-Ladeleistung Pⱼ von drei mit einem aufzuladenden Energiespeicher verbundenen Ladegeräten Lⱼⁱ einer Ladegerätgruppe Gⱼ für vier Regelkreis-Perioden, d. h. für vier Zeitpunkte tₖ (k = 1, 2, 3, 4), dargestellt. Die Gesamt-Ladeleistung Pⱼ ist in Prozent der Maximal-Ladeleistung Mⱼ aufgetragen. Das Aufladen der mit den Ladegeräten Lⱼⁱ verbundenen Energiespeicher erfolgt gemäß dem Aufladeverfahren 10.

Die Ladegeräte Lⱼⁱ sind jeweils identisch ausgeführt und weisen die gleiche maximale Nennleistung Nⱼⁱ (in der Figur und im Folgenden Nⱼ) auf. Beispielhafte Werte für die Nennleistung Nⱼ, die obere Ladeleistungsgrenze Oⱼ und die untere Ladeleistungsgrenze Uⱼ sind in Fig. 3 gezeigt.

Der Ladezustand Zⱼ¹ des an das Ladegerät Lⱼ¹ angeschlossenen elektrischen Energiespeichers beträgt zwischen 0 % und 30 %. Das Ladegerät Lⱼ¹ ist daher der Prioritätsklasse 4 zugeordnet.

Die Ladegeräte Lⱼ² und Lⱼ³ haben jeweils einen Ladezustand Zⱼ², Zⱼ³ zwischen 30 % und 50 % und sind der Prioritätsklasse 3 zugeordnet.

Zum Zeitpunkt t₁ werden die Ladeleistungen pⱼⁱ der drei Ladegeräte Lⱼⁱ ausgelesen. Das Ladegerät Lⱼ¹ der Prioritätsklasse 4 wird mit der Nennleistung Nⱼ, d. h. mit der höchsten Leistungsstufe Sⱼ¹ = 5, betrieben. Das Ladegerät Lⱼ² wird mit der Leistungsstufe Sⱼ² = 4, d. h. mit 75 % des Nennleistung Nⱼ, betrieben. Die Ladeleistung pⱼ³ des Ladegeräts Lⱼ³ entspricht lediglich der Leistungsstufe Sⱼ³ = 1, d. h. 25 % der maximalen Nennleistung Nⱼ. Die momentane Gesamt-Ladeleistung Pⱼ zum Zeitpunkt t₁ liegt unterhalb der unteren Ladeleistungsgrenze Uⱼ. Die Regeleinheit 2 erhöht daher die Ladeleistung pⱼ³ des Ladegeräts Lⱼ³.

Nach einem Zeitabstand Δt werden im nächsten Regelkreis 14 zum Zeitpunkt t₂ wiederum die momentanen Ladeleistungen pⱼⁱ der drei Ladegeräte Lⱼⁱ im Ausleseschritt 15 ausgelesen. Aufgrund der Erhöhung der Ladeleistung pⱼ³ des Ladegeräts Lⱼ³ im vorhergehenden Regelkreis wird dieses nun mit der Leistungsstufe Sⱼ³ = 4 betrieben. Die Gesamt-Ladeleistung Pⱼ zum Zeitpunkt t₂ übersteigt die obere Ladeleistungsgrenze Oⱼ. Daher drosselt die Regeleinheit 2 wiederum die Ladeleistung pⱼ³ des Ladegeräts Lⱼ³ um eine Leistungsstufe Sⱼ³, auf Sⱼ³ = 3. Der Ausleseschritt 15 des darauffolgenden Regelkreises zum Zeitpunkt t₃ ergibt daher, dass das Ladegerät Lⱼ³ mit einer Ladeleistung pⱼ³ von 50 % der maximalen Nennleistung Nⱼ, d. h. mit der Leistungsstufe Sⱼ³ = 3, betrieben wird. Für diesen Fall ist die momentane Gesamt-Ladeleistung Pⱼ zum Zeitpunkt t₃ kleiner als die obere Ladeleistungsgrenze Oⱼ und größer als die untere Ladeleistungsgrenze Uⱼ. Die Regeleinheit 2 wird im Regelschritt 18 des Regelkreises zum Zeitpunkt t₃ die Ladeleistungen pⱼⁱ der drei Ladegeräte Lⱼⁱ unverändert belassen.

Die momentanen Ladeleistungen pⱼⁱ können jedoch auch unabhängig von der Regeleinheit 2 durch externe Einflüsse variieren. Derartige Variationen werden durch den Ausleseschritt 15 eines jeden Regelkreises 14 erkannt. Beispielsweise wurde zwischen den Zeitpunkten t₃ und t₄ die momentane Ladeleistung pⱼ³ des Ladegeräts Lⱼ³ als Reaktion auf externe Einflüsse reduziert. Dies spiegelt sich in der ausgelesenen und berechneten momentanen Gesamt-Ladeleistung Pⱼ zum Zeitpunkt t₄ wieder. Die Regeleinheit 2 kann auf derartige externe Einflüsse reagieren, indem die jeweiligen Ladeleistungen pⱼⁱ hieran angepasst werden. Im vorliegenden Fall wird die Regeleinheit 2 die Ladeleistung pⱼ³ des Ladegeräts Lⱼ³ erhöhen.

Der Regelkreis 14 umfasst zudem einen Trendingschritt 19. In dem Trendingschritt 19 wird ein zeitlicher Verlauf der bisher ausgelesenen Istgrößen, unter anderem der bisher ausgelesenen Ladeleistungen pⱼⁱ, ermittelt. Dieser zeitliche Verlauf wird dem Nutzer an dem Computer 6 und/oder dem mobilen Endgerät 8 angezeigt. Der Nutzer kann die zeitlichen Verläufe der Istgrö-ßen auswerten und hierüber das Verfahren überprüfen und gegebenenfalls auch kontrollierend einschreiten.

Beispielsweise kann der Nutzer, falls der zeitliche Verlauf der momentanen Ladeleistungen pⱼⁱ ergibt, dass die Gesamt-Ladeleistung Pⱼ über längere Zeit nahe der oberen Ladeleistungsgrenze Oⱼ ist, auf das Anschließen weiterer Energiespeicher an bisher freie Ladegeräte Lⱼⁱ verzichten. Alternativ kann er, um dennoch weitere Energiespeicher an freie Ladegeräte Lⱼⁱ anzuschließen, manuell ein Drosseln der Ladeleistungen pⱼⁱ der bisher in Betrieb befindlichen Ladegeräte Lⱼⁱ erzwingen.

## Patentansprüche

1. Verfahren zum Aufladen elektrischer Energiespeicher mit den Schritten:
- Anschließen mindestens zweier aufzuladender elektrischer Energiespeicher an jeweils ein Ladegerät (Lⱼⁱ),
- Aufladen der mindestens zwei elektrischen Energiespeicher mit je einer dem jeweiligen Ladegerät (Lⱼⁱ) zugeordneten Ladeleistung (pⱼⁱ), und
- Regeln der Ladeleistungen (pⱼⁱ), wobei
-- die momentane Ladeleistung (pⱼⁱ) jedes Ladegeräts (Lⱼⁱ) bestimmt wird,
-- die momentanen Ladeleistungen (pⱼⁱ) zu einer momentanen Gesamt-Ladeleistung (Pⱼ) aufsummiert werden,
-- die momentane Gesamt-Ladeleistung (Pⱼ) mit einer vordefinierten oberen Ladeleistungsgrenze (Oⱼ) verglichen wird, und
-- mindestens eine der den jeweiligen Ladegräten (Lⱼⁱ) zugeordneten Ladeleistungen (pⱼⁱ) verringert wird, wenn die momentane Gesamt-Ladeleistung (Pⱼ) größer als die vordefinierte obere Ladeleistungsgrenze (Oⱼ) ist,
**dadurch gekennzeichnet, dass**
das Regeln der Ladeleistungen (pⱼⁱ) abhängig von Ladezuständen (Zⱼⁱ) der jeweiligen elektrischen Energiespeicher ist,
wobei beim Überschreiten der oberen Ladeleistungsgrenze (Oⱼ) zunächst die Ladeleistung (pⱼⁱ) für mindestens einen der mindestens zwei elektrische Energiespeicher verringert wird, dessen Ladezustand (Zⱼⁱ) höher als der Ladezustand (Zⱼⁱ) der anderen elektrischen Energiespeicher ist,
wobei die elektrischen Energiespeicher je nach Ladezustand in verschiedene Prioritätsklassen eingeteilt werden, wobei elektrische Energiespeicher mit geringem Ladezustand (Zⱼⁱ) in höhere Prioritätsklassen eingeteilt werden als solche mit hohem Ladezustand (Zⱼⁱ),
wobei erst, wenn alle Ladegräte (Lⱼⁱ) einer niedrigeren Prioritätsklasse auf einer der jeweiligen Prioritätsklasse zugeordneten minimalen Leistungsstufe (Sⱼⁱ) betrieben werden, eine Drosselung auch für Ladegeräte (Lⱼⁱ) höherer Prioritätsklassen erfolgt.

2. Verfahren nach Anspruch 1, **dadurch gekennzeichnet, dass** die obere Ladeleistungsgrenze (Oⱼ) zwischen 75 % und 99,5 %, insbesondere zwischen 80 % und 99 %, insbesondere zwischen 85 % und 95 %, bevorzugt etwa 90 % einer Maximal-Ladeleistung (Mⱼ) beträgt.

3. Verfahren nach einem der vorgenannten Ansprüche, **dadurch gekennzeichnet, dass** mindestens eine der Ladeleistungen (pⱼⁱ) stufenweise von einer Nennleistung (Nⱼⁱ), die für das Aufladen des jeweiligen elektrischen Energiespeichers vorgesehen ist, verringert wird.

4. Verfahren nach einem der vorgenannten Ansprüche, **dadurch gekennzeichnet, dass** mindestens eine der Ladeleistungen (pⱼⁱ) erhöht wird, sobald die momentane Gesamt-Ladeleistung (Pⱼ) eine untere Ladeleistungsgrenze (Uⱼ) unterschreitet, wobei die untere Ladeleistungsgrenze (Uⱼ) kleiner als die obere Ladeleistungsgrenze (Oⱼ) ist.

5. Verfahren nach Anspruch 4, **dadurch gekennzeichnet, dass** die untere Ladeleistungsgrenze (Uⱼ) zwischen 50 % und 95 %, insbesondere zwischen 60 % und 90 %, insbesondere zwischen 70 % und 80 %, bevorzugt etwa 75 % der Maximal-Ladeleistung (Mⱼ) beträgt.

6. Verfahren nach einem der Ansprüche 4 oder 5, **dadurch gekennzeichnet, dass** die die untere Ladeleistungsgrenze (Uⱼ) variabel, insbesondere uhrzeitabhängig, festgelegt wird.

7. Verfahren nach einem der vorgenannten Ansprüche, **dadurch gekennzeichnet, dass** die obere Ladeleistungsgrenze (Oⱼ) variabel, insbesondere uhrzeitabhängig, festgelegt wird.

8. Verfahren nach einem der vorgenannten Ansprüche, **dadurch gekennzeichnet, dass** ein zeitlicher Verlauf der bisher bestimmten Ladeleistungen (pⱼⁱ) bestimmt wird.

9. Vorrichtung zum Aufladen elektrischer Energiespeicher, aufweisend
- mindestens zwei Ladegeräte (Lⱼⁱ) zum Aufladen je eines elektrischen Energiespeichers mit je einer dem jeweiligen Ladegerät (Lⱼⁱ) zugeordneten Ladeleistung (pⱼⁱ) und
- eine Regeleinheit (2),
wobei die Regeleinheit (2) dazu ausgelegt ist, beim Aufladen von mindestens zwei elektrischen Energiespeichern, die jeweils an einem der mindestens zwei Ladegeräte (Lⱼⁱ) angeschlossen sind, die Ladeleistungen (pⱼⁱ) der jeweiligen zum Aufladen verwendeten Ladegeräte (Lⱼⁱ) zu regeln, wobei:
- die momentane Ladeleistung (pⱼⁱ) jedes der zum Aufladen der mindestens zwei elektrischen Energiespeicher verwendeten Ladegeräte (Lⱼⁱ) bestimmt wird,
- die momentanen Ladeleistungen (pⱼⁱ) zu einer Gesamt-Ladeleistung (Pⱼ) aufsummiert werden, und
- die momentane Gesamt-Ladeleistung (Pⱼ) mit einer vordefinierten oberen Ladeleistungsgrenze (Oⱼ) verglichen wird, und
- mindestens eine der den jeweiligen Ladegräten (Lⱼⁱ) zugeordneten Ladeleistungen (pⱼⁱ) verringert wird, wenn die momentane Gesamt-Ladeleistung (Pⱼ) größer als die vordefinierte obere Ladeleistungsgrenze (Oⱼ) ist,
- wobei das Regeln der Ladeleistungen (pⱼⁱ) abhängig von Ladezuständen (Zⱼⁱ) der jeweiligen elektrischen Energiespeicher ist, und
- wobei beim Überschreiten der oberen Ladeleistungsgrenze (Oⱼ) zunächst die Ladeleistung (pⱼⁱ) für mindestens einen der mindestens zwei elektrische Energiespeicher verringert wird, dessen Ladezustand (Zⱼⁱ) höher als der Ladezustand (Zⱼⁱ) der anderen elektrischen Energiespeicher ist,
wobei die elektrischen Energiespeicher je nach Ladezustand in verschiedene Prioritätsklassen eingeteilt werden, wobei elektrische Energiespeicher mit geringem Ladezustand (Zⱼⁱ) in höhere Prioritätsklassen eingeteilt werden als solche mit hohem Ladezustand (Zⱼⁱ),
wobei erst, wenn alle Ladegräte (Lⱼⁱ) einer niedrigeren Prioritätsklasse auf einer der jeweiligen Prioritätsklasse zugeordneten minimalen Leistungsstufe (Sⱼⁱ) betrieben werden, eine Drosselung auch für Ladegeräte (Lⱼⁱ) höherer Prioritätsklassen erfolgt.

10. Vorrichtung nach Anspruch 9, **gekennzeichnet durch** eine Schnittstelle (4) zur Eingabe Betriebsparametern.

11. Vorrichtung nach einem der Ansprüche 9 oder 10, **gekennzeichnet durch** mindestens zwei Ladegerätgruppen (Gⱼ) mit jeweils mindestens zwei Ladegeräten (Lⱼⁱ), wobei die Regelung der Ladeleistungen (pⱼⁱ) für beide Ladegerätgruppen (Gⱼ) unabhängig voneinander erfolgt.

12. Vorrichtung nach einem der Ansprüche 9 bis 11, **gekennzeichnet durch** einen modularen Aufbau.

## Claims

1. A method for charging electric energy stores comprising the following steps:
- connecting at least two electric energy stores to be charged to in each case one charger (Lⱼⁱ),
- charging the at least two electric energy stores each with in each case one charging power (pⱼⁱ) assigned to the respective charger (Lⱼⁱ), and
- performing closed-loop control with respect to the charging powers (pⱼⁱ), wherein
-- the instantaneous charging power (pⱼⁱ) of each charger (Lⱼⁱ) is determined,
-- the instantaneous charging powers (pⱼⁱ) are added up to give an instantaneous total charging power (Pⱼ),
-- the instantaneous total charging power (Pⱼ) is compared with a predefined upper charging power limit (Oⱼ), and
-- at least one of the charging powers (pⱼⁱ) assigned to the respective chargers (Lⱼⁱ) is reduced when the instantaneous total charging power (Pⱼ) is greater than the predefined upper charging power limit (Oⱼ),
**characterized in that**
the closed-loop control of the charging powers (pⱼⁱ) is dependent on states of charge (Zⱼⁱ) of the respective electric energy stores,
wherein, when the upper charging power limit (Oⱼ) is exceeded, first the charging power (pⱼⁱ) for at least one of the at least two electric energy stores whose state of charge (Zⱼⁱ) is higher than the state of charge (Zⱼⁱ) of the other electric energy stores is reduced,
wherein the electric energy stores are categorized into different priority classes in accordance with their state of charge, wherein electric energy stores with a low state of charge (Zⱼⁱ) are classified into higher priority classes than those with a high state of charge (Zⱼⁱ),
wherein throttling also takes place for chargers (Lⱼⁱ) in higher priority classes only when all chargers (Lⱼⁱ) in a lower priority class are being operated at a minimum power level (Sⱼⁱ) assigned to the respective priority class.

2. The method as claimed in claim 1, **characterized in that** the upper charging power limit (Oⱼ) is between 75% and 99.5%, in particular between 80% and 99%, in particular between 85% and 95%, preferably approximately 90% of a maximum charging power (Mⱼ).

3. The method as claimed in either of the preceding claims, **characterized in that** at least one of the charging powers (pⱼⁱ) is reduced stepwise from a rated power (Nⱼⁱ), which is provided for charging the respective electric energy store.

4. The method as claimed in one of the preceding claims, **characterized in that** at least one of the charging powers (pⱼⁱ) is increased as soon as the instantaneous total charging power (Pⱼ) falls below a lower charging power limit (Uⱼ), wherein the lower charging power limit (Uⱼ) is less than the upper charging power limit (Oⱼ).

5. The method as claimed in claim 4, **characterized in that** the lower charging power limit (Uⱼ) is between 50 % and 95 %, in particular between 60 % and 90 %, in particular between 70 % and 80 %, preferably approximately 75 % of the maximum charging power (Mⱼ).

6. The method as claimed in one of claims 4 or 5, **characterized in that** the lower charging power limit (Uⱼ) is fixed variably, in particular in a manner dependent on the time of day.

7. The method as claimed in one of the preceding claims, **characterized in that** the upper charging power limit (Oⱼ) is fixed variably, in particular in a manner dependent on the time of day.

8. The method as claimed in one of the preceding claims, **characterized in that** a time characteristic of the previously determined charging powers (pⱼⁱ) is determined.

9. A device for charging electric energy stores, having
- at least two chargers (Lⱼⁱ) for charging in each case one electric energy store with in each case one charging power (pⱼⁱ) assigned to the respective charger (Lⱼⁱ) and
- a closed-loop control unit (2),
wherein the closed-loop control unit (2) is configured to perform closed-loop control with respect to the charging powers (pⱼⁱ) of the respective chargers (Lⱼⁱ) used for charging during charging of at least two electric energy stores, which are each connected to one of the at least two chargers (Lⱼⁱ), wherein:
- the instantaneous charging power (pⱼⁱ) of each of the chargers (Lⱼⁱ) used for charging the at least two electric energy stores is determined,
- the instantaneous charging powers (pⱼⁱ) are added to give a total charging power (Pⱼ), and
- the instantaneous total charging power (Pⱼ) is compared with a predefined upper charging power limit (Oⱼ), and
- at least one of the charging powers (pⱼⁱ) assigned to the respective chargers (Lⱼⁱ) is reduced when the instantaneous total charging power (Pⱼ) is greater than the predefined upper charging power limit (Oⱼ),
- wherein the closed-loop control of the charging powers (pⱼⁱ) is dependent on the states of charge (Zⱼⁱ) of the respective electric energy stores, and
- wherein, when the upper charging power limit (Oⱼ) is exceeded, first the charging power (pⱼⁱ) for at least one of the at least two electric energy stores whose state of charge (Zⱼⁱ) is higher than the state of charge (Zⱼⁱ) of the other electric energy stores is reduced,
wherein the electric energy stores are categorized into different priority classes in accordance with their state of charge, wherein electric energy stores with a low state of charge (Zⱼⁱ) are classified into higher priority classes than those with a high state of charge (Zⱼⁱ),
wherein throttling also takes place for chargers (Lⱼⁱ) in higher priority classes only when all chargers (Lⱼⁱ) in a lower priority class are being operated at a minimum power level (Sⱼⁱ) assigned to the respective priority class.

10. The device as claimed in claim 9, **characterized by** an interface (4) for inputting operational parameters.

11. The device as claimed in either of claims 9 or 10, **characterized by** at least two charger groups (Gⱼ), each having at least two chargers (Lⱼⁱ), wherein the closed-loop control of the charging powers (pⱼⁱ) takes place independently of one another for both charger groups (Gⱼ).

12. The device as claimed in one of claims 9 to 11, **characterized by** a modular design.

## Revendications

1. Procédé pour le rechargement d'accumulateurs d'énergie électrique comprenant les étapes consistant à
- raccordement d'au moins deux accumulateurs d'énergie électrique à recharger à un chargeur respectif (Lⱼⁱ),
- recharger les au moins deux accumulateurs d'énergie électrique avec respectivement une puissance de recharge (pⱼⁱ) attribuée au chargeur respectif (Lⱼⁱ), et
- régulation des puissances de recharge (pⱼⁱ), dans lequel
-- la puissance de recharge instantanée (pⱼⁱ) de chaque chargeur (Lⱼⁱ) est déterminée,
-- les puissances de recharge instantanées (pⱼⁱ) sont additionnées pour obtenir une puissance de recharge totale instantanée (Pⱼ),
-- la puissance de recharge totale instantanée (Pⱼ) est comparée à une limite de puissance de recharge supérieure prédéfinie (Oⱼ), et
- au moins l'une des puissances de recharge (pⱼⁱ) attribuées aux chargeurs respectifs (Lⱼⁱ) est réduite lorsque la puissance de recharge totale instantanée (Pⱼ) est supérieure à la limite de puissance de recharge supérieure prédéfinie (Oⱼ),
**caractérisé en ce que**
la régulation des puissances de recharge (pⱼⁱ) dépend des états de recharge (Zⱼⁱ) des accumulateurs d'énergie électrique respectifs,
dans lequel, en cas de dépassement de la limite de la puissance de recharge supérieure (Oⱼ), on réduit d'abord la puissance de recharge (pⱼⁱ) pour au moins l'un des au moins deux accumulateurs d'énergie électrique dont l'état de recharge (Zⱼⁱ) est supérieur à l'état de recharge (Zⱼⁱ) des autres accumulateurs d'énergie électrique,
dans lequel les accumulateurs d'énergie électrique sont répartis dans différentes classes de priorité en fonction de leur état de recharge, dans lequel des accumulateurs d'énergie électrique ayant un faible état de recharge (Zⱼⁱ) sont répartis dans des classes de priorité plus élevées que ceux ayant un état de recharge élevé (Zⱼⁱ),
dans lequel un étranglement n'a lieu que lorsque tous les chargeurs (Lⱼⁱ) d'une classe de priorité inférieure fonctionnent à un niveau de puissance minimal (Sⱼⁱ) associé à la classe de priorité respective, également pour les chargeurs (Lⱼⁱ) de classes de priorité plus élevées.

2. Procédé selon la revendication 1, **caractérisé en ce que** la limite de puissance de recharge supérieure (Oⱼ) est comprise entre 75 % et 99,5 %, en particulier entre 80 % et 99 %, en particulier entre 85 % et 95 %, de préférence environ 90 % d'une puissance de recharge maximale (Mⱼ).

3. Procédé selon l'une quelconque des revendications précédentes, **caractérisé en ce qu'**au moins l'une des puissances de recharge (pⱼⁱ) est diminuée par étapes à partir d'une puissance nominale (Nⱼⁱ) prévue pour la recharge de l'accumulateur d'énergie électrique respectif.

4. Procédé selon l'une quelconque des revendications précédentes, **caractérisé en ce qu'**au moins l'une des puissances de recharge (pⱼⁱ) est augmentée dès que la puissance de recharge totale instantanée (Pⱼ) passe en dessous d'une limite de puissance de recharge inférieure (Uⱼ), la limite de puissance de recharge inférieure (Uⱼ) étant inférieure à la limite de puissance de recharge supérieure (Oⱼ).

5. Procédé selon la revendication 4, **caractérisé en ce que** la limite de puissance de recharge inférieure (Uⱼ) est comprise entre 50 % et 95 %, en particulier entre 60 % et 90 %, en particulier entre 70 % et 80 %, de préférence environ 75 % de la puissance de recharge maximale (Mⱼ).

6. Procédé selon l'une quelconque des revendications 4 ou 5, **caractérisé en ce que** la limite de la puissance de recharge inférieure (Uⱼ) est fixée de manière variable, en particulier en fonction de l'heure.

7. Procédé selon l'une quelconque des revendications précédentes, **caractérisé en ce que** la limite de puissance de recharge supérieure (Oⱼ) est fixée de manière variable, en particulier en fonction de l'heure.

8. Procédé selon l'une quelconque des revendications précédentes, **caractérisé en ce qu'**une évolution dans le temps des puissances de recharge (pⱼⁱ) déterminées jusqu'à présent est déterminée.

9. Dispositif pour le rechargement d'accumulateurs d'énergie électrique, présentant
- au moins deux chargeurs (Lⱼⁱ) pour recharger chacun un accumulateur d'énergie électrique avec chacun une puissance de recharge (pⱼⁱ) attribuée au chargeur respectif (Lⱼⁱ) et
- une unité de régulation (2),
dans lequel l'unité de régulation (2) est conçue pour réguler, lors de la recharge d'au moins deux accumulateurs d'énergie électrique qui sont raccordés chacun à l'un des au moins deux chargeurs (Lⱼⁱ), les puissances de recharge (pⱼⁱ) des chargeurs respectifs (Lⱼⁱ) utilisés pour la recharge, dans lequel :
- la puissance de recharge instantanée (pⱼⁱ) de chacun des chargeurs (Lⱼⁱ) utilisés pour recharger les au moins deux accumulateurs d'énergie électrique est déterminée,
- les puissances de recharge instantanées (pⱼⁱ) sont additionnées pour obtenir une puissance de recharge totale (Pⱼ), et
- la puissance de recharge totale instantanée (Pⱼ) est comparée à une limite de puissance de recharge supérieure prédéfinie (Oⱼ), et
- au moins une des puissances de recharge (pⱼⁱ) attribuées aux chargeurs respectifs (Lⱼⁱ) est réduite lorsque la puissance de recharge totale instantanée (Pⱼ) est supérieure à la limite de puissance de recharge supérieure prédéfinie (Oⱼ),
- dans lequel la régulation des puissances de recharge (pⱼⁱ) dépend des états de recharge (Zⱼⁱ) des accumulateurs d'énergie électrique respectifs, et
- dans lequel, en cas de dépassement de la limite de la puissance de recharge supérieure (Oⱼ), on réduit d'abord la puissance de recharge (pⱼⁱ) pour au moins l'un des au moins deux accumulateurs d'énergie électrique dont l'état de recharge (Zⱼⁱ) est supérieur à l'état de recharge (Zⱼⁱ) des autres accumulateurs d'énergie électrique,
dans lequel les accumulateurs d'énergie électrique sont répartis dans différentes classes de priorité en fonction de leur état de recharge, dans lequel des accumulateurs d'énergie électrique présentant un faible état de recharge (Zⱼⁱ) sont répartis dans des classes de priorité plus élevées que ceux ayant un état de recharge élevé (Zⱼⁱ),
dans lequel un étranglement n'a lieu que lorsque tous les chargeurs (Lⱼⁱ) d'une classe de priorité inférieure fonctionnent à un niveau de puissance minimal (Sⱼⁱ) associé à la classe de priorité respective, également pour les chargeurs (Lⱼⁱ) de classes de priorité plus élevées.

10. Dispositif selon la revendication 9, **caractérisé par** une interface (4) pour l'entrée de paramètres de fonctionnement.

11. Dispositif selon l'une quelconque des revendications 9 ou 10, **caractérisé par** au moins deux groupes de chargeurs (Gⱼ) comprenant chacun au moins deux chargeurs (Lⱼⁱ), dans lequel la régulation des puissances de recharge (pⱼⁱ) pour les deux groupes de chargeurs (Gⱼ) est indépendante.

12. Dispositif selon l'une quelconque des revendications 9 à 11, **caractérisé par** une structure modulaire.
